(19) Europäisches Patentamt European Patent Office Office européen des brevets

(11) **EP 3 650 836 B1**

(12) **FASCICULE DE BREVET EUROPEEN**

(45) Date de publication et mention de la délivrance du brevet:
**29.12.2021 Bulletin 2021/52**

(51) Int Cl.:
***G01N 21/39*** *(2006.01)*          ***G01N 21/17*** *(2006.01)*

(21) Numéro de dépôt: **19207049.8**

(22) Date de dépôt: **05.11.2019**

(54) **DISPOSITIF DE MESURE BASÉ SUR UNE MESURE OPTIQUE DANS UNE CAVITÉ OPTO-MÉCANIQUE**

MESSVORRICHTUNG BASIERT AUF OPTISCHER ERFASSUNG DER BEWEGUNG EINER OPTO-MECHANISCHEN KAVITÄT

MEASUREMENT APPARATUS BASED ON OPTICAL DETECTION OF THE MOTION OF AN OPTO-MECHANICAL CAVITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.11.2018 FR 1860198**

(43) Date de publication de la demande:
**13.05.2020 Bulletin 2020/20**

(73) Titulaire: **COMMISSARIAT À L'ÉNERGIE ATOMIQUE ET AUX ÉNERGIES ALTERNATIVES 75015 Paris (FR)**

(72) Inventeurs:
• **DURAFFOURG, Laurent**
  **38054 GRENOBLE CEDEX 09 (FR)**
• **FEDELI, Jean-Marc**
  **38054 GRENOBLE CEDEX 09 (FR)**
• **GIDON, Serge**
  **38054 GRENOBLE CEDEX 09 (FR)**
• **LABEYE, Pierre**
  **38054 GRENOBLE CEDEX 09 (FR)**

(74) Mandataire: **Brevalex
56, Boulevard de l'Embouchure
B.P. 27519
31075 Toulouse Cedex 2 (FR)**

(56) Documents cités:
**EP-A1- 2 543 987          EP-B1- 2 543 987
GB-A- 2 508 908          US-A- 5 195 374
US-A1- 2014 043 614**

• **M. HOSSEIN-ZADEH ET AL: "An Optomechanical Oscillator on a Silicon Chip", IEEE JOURNAL OF SELECTED TOPICS IN QUANTUM ELECTRONICS., vol. 16, no. 1, 1 janvier 2010 (2010-01-01), pages 276-287, XP055485590, US ISSN: 1077-260X, DOI: 10.1109/JSTQE.2009.2031066**

EP 3 650 836 B1

## Description

### DOMAINE TECHNIQUE

L'invention concerne le domaine des dispositifs de mesure optique, notamment, mais de manière non limitative, pour mesurer une concentration en gaz.

### ÉTAT DE LA TECHNIQUE ANTÉRIEURE

On connaît dans l'art antérieur de nombreux dispositifs optiques pour mesurer une concentration en gaz, basés sur la propriété de chaque gaz d'absorber la lumière à des longueurs d'onde bien particulières (raies d'absorption).

On peut citer par exemple la technique dite CEAS, pour l'anglais « *cavity enhanced absorption spectroscopy* », dans laquelle on injecte dans une cavité optiquement résonante un faisceau lumineux à une longueur d'onde d'absorption caractéristique d'un gaz. Lorsque la cavité est remplie par ce gaz, le faisceau lumineux est partiellement absorbé par le gaz dans la cavité. L'absorption est d'autant plus efficace que le faisceau lumineux effectue de nombreux allers-retours dans la cavité. La mesure de l'intensité lumineuse transmise par la cavité donne une information sur la concentration du gaz dans la cavité.

Un inconvénient de cette technique réside notamment dans le fait que la source laser fournissant le faisceau lumineux possède des variations aléatoires de modes qui rendent le dispositif instable et bruité. Différentes solutions ont été proposées pour augmenter la stabilité.

Par exemple, dans la technique dite OA-CEAS, pour l'anglais « *off-axis CEAS* », on évite intentionnellement le couplage résonant à un mode de cavité unique. Pour cela, le faisceau laser injecté dans la cavité est désaxé relativement à l'axe de la cavité, et suit une trajectoire traçant un motif elliptique sur les miroirs qui délimitent la cavité. On mesure l'intensité lumineuse en sortie de la cavité, intégrée sur tout le motif elliptique. Cette technique est décrite par exemple par P. Malara et al., dans l'article « Sensitivity enhancement of off-axis ICOS using wavelength Modulation », Appl Phys B, Lasers and Optics (2012).

En variante, on utilise une partie des photons résonants de la cavité comme contreréaction sur la source laser, pour forcer une émission aux fréquences exactes de résonance de la cavité. Cette technique est décrite par exemple par D. Romanini et al., dans l'article « Fast, low-noise, mode-by-mode, cavity-enhanced absorption spectroscopy by diode-laser self-locking », Appl Phys B, Lasers and Optics (2005). Le document US 2014/0043614 A1 divulgue un dispositif de mesure d'une concentration d'hydrogène, comportant un élément mécanique mobile et/ou déformable, monté dans une cavité optique, mobile autour d'une position de retour élastique et/ou élastiquement déformable, situé sur le chemin optique d'un faisceau lumineux d'excitation et apte à être mis en oscillation par celui-ci, le dispositif étant configuré de sorte qu'en fonctionnement, la présence du gaz prédéterminé dans la cavité optique modifie l'oscillation de l'élément mécanique mobile et/ou déformable, le dispositif de mesure comprenant en outre des moyens de détection pour détecter une variation d'au moins une caractéristique d'un faisceau lumineux de mesure induite par l'oscillation dudit élément mécanique ainsi que des moyens de calcul pour déduire une mesure de la concentration du gaz prédéterminé à partir de la variation de ladite au moins une caractéristique ainsi détectée.

Chacune de ces solutions forme cependant un dispositif complexe et encombrant.

Un objectif de la présente invention est de proposer un dispositif de mesure, permettant notamment de mesurer une concentration en gaz, et capable d'offrir à la fois un encombrement réduit et une grande simplicité de réalisation et de réglage.

### EXPOSÉ DE L'INVENTION

Cet objectif est atteint avec un dispositif de mesure selon la revendication 1.

De préférence, c'est le faisceau lumineux d'excitation qui est apte à mettre en oscillation l'élément mécanique mobile et/ou déformable, grâce à une intensité lumineuse supérieure à celle du faisceau lumineux d'excitation et notamment par un phénomène d'auto-oscillation (décrit plus loin).

La cavité optique d'excitation et l'élément mécanique mobile et/ou déformable forment ensemble une cavité opto-mécanique, dans laquelle un phénomène optique et un phénomène mécanique interagissent l'un sur l'autre. En particulier, le faisceau lumineux d'excitation confiné dans la cavité optique d'excitation est apte à déplacer et/ou déformer l'élément mécanique mobile et/ou déformable selon un mouvement oscillant.

L'interaction entre un phénomène optique et un phénomène mécanique permet de réaliser une mesure sur le phénomène mécanique (mesure du déplacement ou de la déformation de l'élément mécanique mobile et/ou déformable) plutôt que sur le phénomène optique directement (mesure d'une caractéristique du faisceau lumineux d'excitation). On s'affranchit ainsi des défauts de stabilité mentionnés en introduction, sans pour autant complexifier outre mesure le dispositif, ni augmenter notablement son encombrement.

Selon l'invention, la mesure sur le phénomène mécanique est réalisée à l'aide du faisceau lumineux de mesure, distinct du faisceau lumineux d'excitation. Cette mesure optique présente l'avantage d'offrir une grande précision pour un faible encombrement. En outre, les caractéristiques optiques du faisceau lumineux utilisé pour la mesure sont ainsi décorrellées des caractéristiques optiques du faisceau lumineux absorbé par le gaz, ce qui permet de réaliser la détection dans des gammes de longueurs d'onde pour lesquelles on dispose de détecteurs particulièrement performants. En particulier, le faisceau lumineux absorbé par le gaz (faisceau lumineux d'excitation) peut être situé dans le moyen infrarouge, qui est la gamme spectrale la plus intéressante pour la spectrométrie de gaz, tandis que le faisceau lumineux utilisé pour la mesure (faisceau lumineux de mesure) peut être situé dans le visible, dans une gamme spectrale qui n'impose pas l'utilisation d'un détecteur refroidi de type MCT (détecteur à base de Tellure de Mercure-Cadmium) pour mesurer un signal.

Enfin, la mesure optique s'avère particulièrement avantageuse dans des variantes de l'invention dans lesquelles l'élément mécanique monté mobile et/ou déformable appartient à la fois à la cavité optique d'excitation et à une cavité optique de mesure recevant le faisceau lumineux de mesure.

Le dispositif de mesure selon l'invention offre une limite de détection et une stabilité meilleures que les systèmes de type CEAS basés sur une cavité résonante simple, tout en présentant un encombrement et une complexité moindre en comparaison avec les systèmes plus complexes présentés en introduction.

De préférence, la longueur d'onde de mesure est située sur le spectre visible et proche infrarouge, entre 380 nm et 1 $\mu$m, et la longueur d'onde d'excitation est située en dehors du spectre visible et proche infrarouge.

Avantageusement, le faisceau lumineux d'excitation est apte à mettre en oscillation l'élément mécanique mobile et/ou déformable, et le faisceau lumineux de mesure présente une intensité lumineuse au moins deux fois inférieure à celle du faisceau lumineux d'excitation.

La longueur d'onde d'excitation correspond avantageusement au maximum d'un pic de résonance de la cavité optique d'excitation à l'équilibre, la cavité optique d'excitation étant dite à l'équilibre lorsque l'élément mécanique mobile et/ou déformable se trouve dans une position centrale entre deux positions extrêmes de son mouvement d'oscillation.

Le dispositif selon l'invention peut comprendre en outre une cavité optique dite de mesure, optiquement résonante à ladite longueur d'onde de mesure et configurée pour recevoir en entrée le faisceau lumineux de mesure, avec l'élément mécanique mobile et/ou déformable qui appartient à la fois à la cavité optique d'excitation et à la cavité optique de mesure.

La longueur d'onde de mesure peut alors être située sur un pic de résonance de la cavité optique de mesure à l'équilibre, la cavité optique de mesure étant dite à l'équilibre lorsque l'élément mécanique mobile et/ou déformable se trouve dans une position centrale entre deux positions extrêmes de son mouvement d'oscillation.

La longueur d'onde de mesure peut en particulier être située sur une pente dudit pic de résonance.

Avantageusement, une première face de l'élément mécanique mobile et/ou déformable est optiquement réfléchissante à la longueur d'onde d'excitation, et une seconde face de l'élément mécanique mobile et/ou déformable, opposée à ladite première face, est optiquement réfléchissante à la longueur d'onde de mesure, avec la cavité optique d'excitation qui s'étend du côté de la première face de l'élément mécanique mobile et/ou déformable et la cavité optique de mesure qui s'étend du côté de la seconde face de l'élément mécanique mobile et/ou déformable.

La cavité optique d'excitation et la cavité optique de mesure peuvent se recouvrir au moins partiellement, avec l'élément mécanique mobile et/ou déformable qui s'étend dans une région située à la fois à l'intérieur de la cavité optique d'excitation et à l'intérieur de la cavité optique de mesure.

De préférence, l'élément mécanique mobile et/ou déformable s'étend selon une surface comprise entre 100*100 $\mu$m$^2$ et 10*10 mm$^2$.

Au moins une région à l'intérieur de la cavité optique d'excitation est adaptée à recevoir un milieu gazeux ou liquide, avec la longueur d'onde d'excitation qui correspond à une longueur d'onde d'absorption caractéristique d'un gaz ou d'un liquide prédéterminé, de sorte qu'en fonctionnement, la présence dudit gaz ou liquide prédéterminé dans la cavité optique d'excitation modifie l'oscillation de l'élément mécanique mobile et/ou déformable. De préférence, l'élément mécanique mobile et/ou déformable s'étend alors à l'intérieur d'un logement sous vide.

En variante, l'élément mécanique mobile et/ou déformable peut comporter une zone réceptrice pour recevoir une ou plusieurs particules, avec l'élément mécanique mobile et/ou déformable qui est configuré pour qu'en fonctionnement, son oscillation soit modifiée par la présence desdites particules sur la zone réceptrice.

L'invention couvre également un système comprenant un interféromètre dont l'un des bras comporte la cavité optique de mesure.

## BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :

- la figure 1 illustre de manière schématique un premier mode de réalisation d'un dispositif de mesure selon l'invention ;
- les figures 2A et 2B illustrent le lien, dans une cavité optiquement résonante, entre la position du miroir de fond et la longueur d'onde de résonance ;
- les figures 3A à 3C illustrent le positionnement des longueurs d'onde d'excitation et de mesure, relativement aux réponses spectrales respectives des cavités optiques du dispositif de la figure 1 ;
- les figures 4A et 4B illustrent l'intensité lumineuse, respectivement la phase, du faisceau lumineux de mesure émergeant du dispositif de la figure 1 ;
- la figure 5 illustre de manière schématique une variante du mode de réalisation de la figure 1 ;
- les figures 6 à 8 illustrent de manière schématique différentes variantes d'un deuxième mode de réalisation d'un dispositif de mesure selon l'invention ;
- la figure 9 illustre de manière schématique un troisième mode de réalisation d'un dispositif de mesure selon l'invention ;
- la figure 10 illustre de manière schématique un système comportant un dispositif de mesure selon l'invention et des moyens pour réaliser une mesure sur le faisceau lumineux de mesure émergeant dudit dispositif;
- les figures 11A à 11D et 12A à 12C illustrent respectivement deux procédés de réalisation d'un dispositif de mesure selon l'invention.

## EXPOSÉ DÉTAILLÉ DE MODES DE RÉALISATION PARTICULIERS

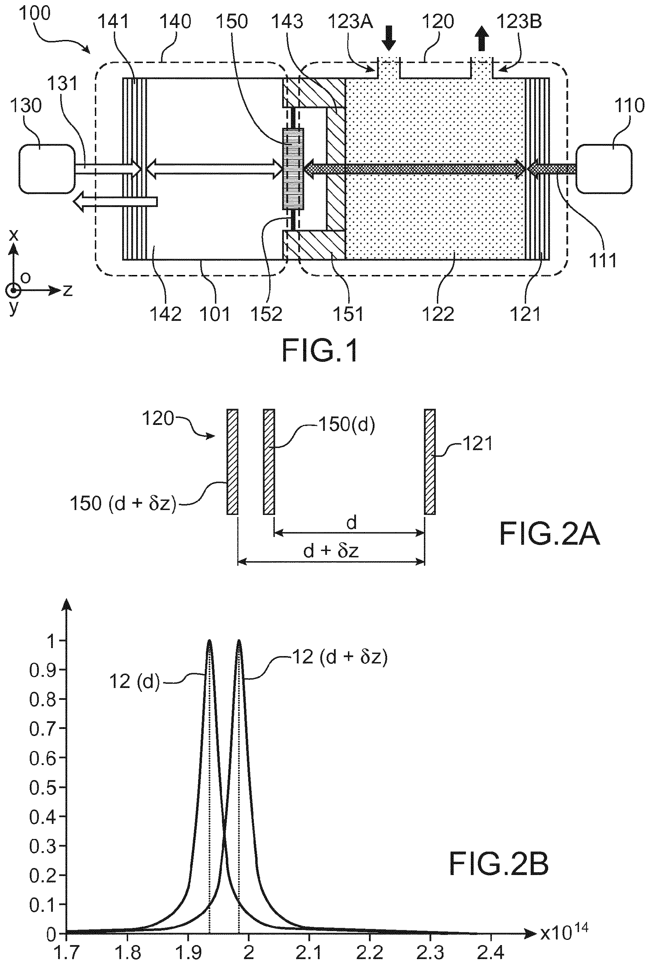

La figure 1 illustre de manière schématique un premier mode de réalisation d'un dispositif de mesure 100 selon l'invention, formant un capteur de gaz pour mesurer une concentration d'un gaz prédéterminé.

Le dispositif 100 est représenté selon une vue en coupe dans le plan (x0z) d'un repère orthonormé (0xyz).

Le dispositif 100 comporte ici :

- une première source lumineuse 110 ;
- une première cavité optique 120, dite cavité optique d'excitation ;
- une seconde source lumineuse 130 ; et
- une seconde cavité optique 140, dite cavité optique de mesure.

La première source lumineuse 110 est formée d'une source laser, avec un spectre d'émission qui présente un ou plusieurs pic(s) d'émission centrés chacun sur une longueur d'onde d'excitation respective $\lambda_E$, où $\lambda_E$ qui correspond à une raie d'absorption caractéristique du gaz dont on souhaite mesurer la concentration. Une longueur d'onde d'excitation $\lambda_E$ est comprise de préférence entre 1 $\mu m$ et 15 $\mu m$, et plus préférentiellement entre 3 $\mu m$ et 12 $\mu m$ (infrarouge moyen). Cette gamme de longueurs d'onde regroupe les longueurs d'onde utiles pour identifier de nombreux composés gazeux, notamment les alcanes, les composés organiques volatils, les oxydes de soufre ou d'azote, etc. On a par exemple $\lambda_E$ = 4,23 $\mu m$, ce qui correspond à l'une des longueurs d'onde d'absorption du dioxyde de carbone. Selon d'autres variantes, une longueur d'excitation $\lambda_E$ peut être située dans l'ultra-violet, par exemple pour détecter l'ozone (à 254 nm). La première source lumineuse 110 est constituée par exemple d'un laser à cascade quantique (QCL, pour l'anglais « *quantum cascade laser »)*. Le faisceau lumineux émis par la première source lumineuse 110 est nommé faisceau lumineux d'excitation, 111. En utilisation, le faisceau lumineux d'excitation 111 se propage selon l'axe (Oz), jusqu'à la cavité optique d'excitation 120.

La cavité optique d'excitation 120 est une cavité Fabry-Pérot, ici une cavité linéaire alignée selon l'axe (0z) et délimitée par un miroir d'entrée 121 et un miroir de fond. Elle présente une longueur de quelques centimètres selon l'axe (Oz). De préférence, le facteur de qualité de la cavité optique d'excitation 120 est supérieur ou égal à $10^4$ et même $10^5$, grâce à des miroirs de grande qualité (réflectivité supérieure ou égale à 98% par exemple). On a par exemple, sans absorption par un milieu gazeux dans la cavité optique d'excitation 120, un facteur de qualité d'environ 150000, et une finesse d'environ 1000, ces valeurs variant légèrement en fonction de l'absorption. La cavité optique d'excitation 120 est optiquement résonante à la longueur d'onde d'excitation $\lambda_E$. Le miroir de fond est formé ici d'un élément mécanique oscillant 150, réfléchissant à la longueur d'onde d'excitation $\lambda_E$. En utilisation, le faisceau lumineux d'excitation 111 effectue plusieurs allers et retours dans la cavité optique d'excitation 120.

La seconde source lumineuse 130 est formée d'une source laser émettant dans le spectre visible ou proche infrarouge, à des longueurs d'onde situées entre 380 nm et 1 $\mu m$ pour lesquelles il existe des photo-détecteurs présentant d'excellentes performances en détection. Le spectre d'émission de la seconde source lumineuse 130 présente en particulier un pic d'émission centré sur une longueur d'onde dite de mesure, $\lambda_D$, avec par exemple $\lambda_D$ = 830 *nm.* Le faisceau lumineux émis par la seconde source lumineuse 130 est nommé faisceau lumineux de mesure, 131. En utilisation, le faisceau lumineux de mesure 131 se propage selon l'axe (Oz), jusqu'à la cavité optique de mesure 140, où il effectue plusieurs allers et retours avant d'émerger de cette dernière. Le faisceau lumineux de mesure 131 est de préférence un signal continu.

La cavité optique de mesure 140 est une cavité Fabry-Pérot, ici une cavité linéaire alignée selon l'axe (Oz), et délimitée par un miroir d'entrée 141, et un miroir de fond. De préférence, le facteur de qualité de la cavité optique de mesure 140 est supérieur ou égal à $10^4$, grâce à des miroirs de grande qualité (réflectivité supérieure ou égale à 95% par exemple). On a par exemple un facteur de qualité d'environ 73000, et une finesse d'environ 30. La cavité optique de mesure 140 est optiquement résonante à la longueur d'onde de mesure $\lambda_D$. Le miroir de fond est formé ici par l'élément mécanique oscillant 150, également réfléchissant à la longueur d'onde de mesure $\lambda_D$.

L'élément mécanique oscillant 150 sert de miroir de fond pour chacune de ces deux cavités 120 et 140. Il s'étend entre les deux cavités optiques 120 et 140. L'élément mécanique oscillant 150 est élastiquement déformable, apte à se déformer mécaniquement en réponse à l'application d'une force mécanique externe, et à revenir à sa forme initiale à l'arrêt de l'application de ladite force. Au repos, il s'étend de préférence dans un plan (x0y) orthogonal à l'axe (0z), avec de chaque côté l'une des deux cavités optiques 120 et 140. En réponse à l'application d'une force mécanique orientée selon l'axe (Oz), l'élément mécanique oscillant 150 s'incurve en direction de l'une ou l'autre des cavités optiques 120 et 140. L'élément mécanique oscillant 150 forme ainsi un élément mécanique mobile et/ou déformable selon l'invention, apte à se déformer sous l'effet d'une force de pression, et à revenir à sa forme initiale lorsqu'il n'est plus soumis à cette force de pression. En particulier, l'élément mécanique oscillant 150 est apte à se déformer en s'incurvant, sous l'effet d'une force de pression orientée selon l'axe (Oz).

L'élément mécanique oscillant 150 est constitué ici d'une membrane revêtue d'un ou plusieurs revêtements réfléchissants. De préférence, le ou les revêtement(s) réfléchissant(s) s'étendent chacun sur toute la surface de la membrane, dans un plan parallèle au plan (Oxy). Chaque revêtement réfléchissant peut être constitué d'une fine couche de métal, par exemple en argent ou en or. L'élément mécanique oscillant 150 comporte par exemple deux revêtements réfléchissants, recouvrant respectivement l'une et l'autre face de la membrane, et formant miroir de fond respectivement pour la cavité optique d'excitation et la cavité optique de mesure. En variante, un même revêtement réfléchissant peut former à la fois le miroir de fond de la cavité optique d'excitation et le miroir de fond de la cavité optique de mesure. La membrane est quant à elle constituée par exemple de nitrure de silicium. L'élément mécanique oscillant 150 présente, dans un plan parallèle au plan (Oxy), une surface comprise entre 100*100 $\mu m^2$ et quelques $mm^2$, par exemple un carré de 1 $mm^2$. Son épaisseur (selon (Oz)) est comprise entre quelques dizaines de nanomètres et quelques micromètres, par exemple 50 nm. L'élément mécanique oscillant 150 est monté solidaire d'un support périphérique 151, et tendue à l'intérieur dudit support périphérique 151 avec une contrainte biaxiale en tension de l'ordre de 100 MPa. L'élément mécanique oscillant 150 peut ainsi osciller autour d'une position d'équilibre, à l'image d'un tambour. Un tel dimensionnement de l'élément mécanique oscillant 150 permet d'atteindre des fréquences de résonance mécaniques de plusieurs MHz. Le support périphérique 151 est de préférence traité antireflet à la longueur d'onde d'excitation, de manière à minimiser son impact sur le faisceau lumineux d'excitation.

Dans l'exemple illustré à la figure 1, l'élément mécanique oscillant 150 est monté solidaire du support périphérique 151, par l'intermédiaire d'un raccord périphérique 152. Le raccord périphérique peut être constitué d'une rondelle, ou d'une série de bras, s'étendant entre l'élément mécanique oscillant 150 et le support périphérique 151 en entourant l'élément mécanique oscillant 150. Le raccord périphérique 152 est optionnel. Il peut être formé rigide.

Selon une variante de l'invention, le raccord périphérique 152 est élastiquement déformable, tandis que l'élément mécanique oscillant 150 forme un élément rigide. En particulier, le raccord périphérique 152 est apte à se déformer mécaniquement en réponse à l'application d'une force mécanique externe, et à revenir à sa forme initiale à l'arrêt de l'application de ladite force. Au repos, le raccord périphérique 152 s'étend de préférence dans un plan (x0y) orthogonal à l'axe (0z), avec de chaque côté l'une des deux cavités optiques 120 et 140. Lorsqu'une force mécanique orientée selon l'axe (0z) s'exerce sur l'élément mécanique oscillant 150, ce dernier se déplace en translation selon l'axe (Oz) en entraînant avec lui le raccord périphérique 152 qui se déforme. L'élasticité du raccord périphérique 152 permet de ramener l'élément mécanique oscillant 150 à sa position initiale, lorsque ladite force mécanique cesse de s'exercer sur l'élément mécanique oscillant 150. L'élément mécanique oscillant 150 forme ainsi un élément mécanique mobile et/ou déformable selon l'invention, apte à se déplacer en translation selon l'axe (Oz), autour d'une position de retour élastique. La position de retour élastique correspond à la position de l'élément mécanique oscillant 150 le long de l'axe (Oz), en l'absence d'application sur ce dernier d'une force mécanique externe orientée selon l'axe (Oz). Selon d'autres variantes, l'élément mécanique oscillant 150 peut être à la fois élastiquement déformable, et mobile en translation autour d'une position de retour élastique.

La cavité optique de mesure et la cavité optique d'excitation s'étendent ensemble à l'intérieur d'une enceinte 101 comportant au moins deux logements étanches.

Un premier logement 122 est situé à l'intérieur de la cavité optique d'excitation 120, et configuré pour recevoir un milieu gazeux sur lequel on souhaite réaliser une mesure de concentration. A la figure 1, on a représenté de façon schématique deux ouvertures 123A 123B dans l'enceinte 101, formant respectivement une entrée et une sortie pour l'arrivée d'un milieu gazeux dans le logement 122, respectivement la sortie du milieu gazeux hors du logement 122.

Un second logement 142 est mis sous vide, et s'étend à la fois dans la cavité optique d'excitation et dans la cavité optique de mesure en encadrant l'élément mécanique oscillant 150. Le second logement 142 forme un logement de mise sous vide de l'élément mécanique oscillant. Le vide désigne ici un milieu à une pression inférieure à $10^{-5}$ bar et même inférieure ou égale à $10^{-6}$ bar (avec 1 bar équivalent à $10^5$ Pa). L'élément mécanique oscillant étant mis sous vide, il peut former un oscillateur mécanique avec un facteur de qualité élevé pouvant atteindre $10^4$ à $10^5$.

Ici, le logement 142 s'étend sur toute la cavité optique de mesure 140, et sur une partie de la cavité optique d'excitation 120, en étant séparé du logement 122 par une plaque d'étanchéité 143. La plaque d'étanchéité réalise une isolation entre les deux logements 121, 142. Elle est transparente à la longueur d'onde du faisceau lumineux d'excitation 111. De préférence, elle est traitée antireflet à cette même longueur d'onde.

La mise sous vide de l'élément mécanique oscillant n'est pas un élément essentiel de l'invention, et des variantes peuvent être mises en œuvre, dans lesquelles la cavité optique de mesure et la cavité optique d'excitation sont toutes deux entièrement remplies par le milieu à étudier.

Afin de mieux comprendre la suite, on a illustré en figures 2A et 2B, le lien entre la position de l'élément mécanique oscillant 150, et la position des pics de résonance de la cavité optique d'excitation 120.

La figure 2A illustre de manière schématique la cavité optique d'excitation 120, pour deux positions de l'élément mécanique oscillant 150, respectivement à une distance d et à une distance d + $\delta z$ du miroir d'entrée 121. Les deux positions de l'élément mécanique oscillant 150 sont notées respectivement 150(d) et 150(d + $\delta z$).

La figure 2B illustre la position spectrale de la résonance de la cavité optique d'excitation, lorsque l'élément mécanique oscillant 150 est situé à une distance d du miroir d'entrée 121, respectivement d + $\delta z$. L'axe des abscisses est une fréquence optique en Hz, la longueur d'onde et la fréquence optique étant liées par la célérité de la lumière dans le vide. L'axe des ordonnées est une fonction de transfert, sans unité, correspondant à une densité d'énergie réfléchie ou transmise par la cavité optique, et normalisée à l'unité au maximum de la réflexion ou de la transmission. La résonance se traduit par un pic, nommé pic de résonance, sur la fonction de transfert de la cavité optique en fonction de la fréquence. On voit à la figure 2B que la position spectrale de la résonance dépend de la position de l'élément mécanique oscillant 150. Les deux positions du pic de résonance sont notées respectivement 12(d) et 12(d + $\delta z$).

En fonctionnement, le faisceau lumineux d'excitation 111 est confiné dans la cavité optique d'excitation 120, où il forme une onde stationnaire qui exerce sur l'élément mécanique oscillant 150 une pression de radiation. Cette pression de radiation forme une force mécanique externe orientée selon l'axe (Oz), apte à déformer élastiquement et/ou déplacer autour d'une position de retour élastique l'élément mécanique oscillant. Dans l'exemple illustré en figure 2, la pression de radiation déplace légèrement l'élément mécanique oscillant le long de l'axe (Oz). Ce déplacement modifie très légèrement la longueur d'onde de résonance de la cavité optique d'excitation 120. La longueur d'onde du faisceau lumineux d'excitation 111 ne correspondant plus exactement à la longueur d'onde de résonance de la cavité optique d'excitation 120, la pression de radiation exercée sur l'élément mécanique oscillant 150 diminue, de sorte qu'il retourne vers sa position initiale, où il va de nouveau être soumis à une forte pression de radiation. L'élément mécanique oscillant réalise ainsi un mouvement d'oscillation mécanique à une fréquence $f_1$ nommé auto-oscillation. Si le faisceau lumineux d'excitation 111 est continu, la fréquence $f_1$ de l'auto-oscillation est fixée par les caractéristiques géométriques de la cavité optique d'excitation 120 et de l'élément mécanique oscillant. Si le faisceau lumineux d'excitation 111 est modulé en amplitude, $f_1$ correspond à la fréquence de modulation du faisceau 111. Un faisceau lumineux d'excitation 111 modulé en amplitude permet par exemple d'exciter uniquement certains modes mécaniques d'intérêt de l'élément mécanique oscillant 150. En tout état de cause, $f_1$ est généralement supérieure 500 kHz, par exemple 1 MHz.

Le même phénomène se produit lorsque la pression de radiation déforme légèrement l'élément mécanique oscillant, en l'incurvant le long de l'axe (Oz).

Pour éviter de générer une trop forte pression de radiation dans la cavité optique de mesure, susceptible de perturber l'oscillation de l'élément mécanique oscillant générée par le faisceau lumineux d'excitation 111, la puissance lumineuse du faisceau lumineux de mesure 131 est choisie bien inférieure à celle du faisceau lumineux d'excitation 111. De cette manière, la pression de radiation exercé sur l'élément mécanique oscillant 150 par le faisceau lumineux de mesure 131 est négligeable, au regard de la pression de radiation exercé par le faisceau lumineux d'excitation 111. Le rapport de la puissance lumineuse du faisceau lumineux d'excitation divisée par la puissance lumineuse du faisceau lumineux de mesure est supérieur ou égal à 2, et même supérieur ou égal à 10. Par exemple, le faisceau lumineux d'excitation injecté dans la cavité optique d'excitation 120 présente une puissance lumineuse $P_E = 10\mu W$, et le faisceau lumineux de mesure injecté dans la cavité optique de mesure 140 présente une puissance lumineuse $P_D = 1\mu W$. Dans la suite, on parlera indistinctement d'intensité lumineuse ou de puissance lumineuse, ces deux grandeurs étant liées.

En fonctionnement, l'élément mécanique oscillant 150 est donc mis en oscillation, sous l'effet d'une pression de radiation exercée par le faisceau lumineux d'excitation 111 confiné dans la cavité optique d'excitation 120.

La distance entre le miroir d'entrée 121 de la cavité optique d'excitation 120 et le miroir d'entrée 141 de la cavité optique de mesure 140 est fixe. Par conséquent, l'oscillation de l'élément mécanique oscillant 150 se traduit par une oscillation de la longueur de la cavité optique de mesure 140, et donc une oscillation de la position spectrale des pics de résonance de cette dernière. Ladite oscillation de la position spectrale des pics de résonance se traduit par une modulation d'amplitude sur le faisceau lumineux de mesure transmis ou réfléchi par la cavité optique de mesure 140, émergeant de cette dernière après y avoir effectué plusieurs allers et retours.

En fonctionnement, et en présence de dioxyde de carbone dans le logement 122, le dioxyde de carbone absorbe en partie le faisceau lumineux d'excitation circulant dans la cavité optique d'excitation, avec un taux d'absorption qui dépend de la concentration en dioxyde de carbone. Cette absorption a pour conséquence que la pression de radiation qui s'exerce sur l'élément mécanique oscillant est moins forte. Par conséquent, l'amplitude des oscillations de l'élément mécanique oscillant 150 diminue, ce qui se traduit par une variation des caractéristiques du faisceau lumineux de mesure émergeant de la cavité optique de mesure 140 après y avoir effectué plusieurs passages. En particulier, l'amplitude de modulation et la phase du faisceau lumineux de mesure émergeant de la cavité optique de mesure sont modifiées.

Le faisceau lumineux de mesure émergeant de la cavité optique de mesure 140 vérifie en particulier la condition suivante :

$$\delta I_R = \frac{3\sqrt{3}}{4} \frac{C_R Q_{opt}}{v_R} I_0 \frac{g\delta z}{2\pi} \qquad (1)$$

avec $\delta I_R$ l'amplitude crête à crête de la modulation d'intensité lumineuse du faisceau lumineux de mesure émergeant de la cavité optique de mesure 140,

$\delta z$ le déplacement de l'élément mécanique oscillant 150,

$g$ le coefficient de couplage optomécanique reliant la résonance optique dans la cavité optique d'excitation et le déplacement mécanique de l'élément mécanique oscillant,

$Q_{opt}$ le facteur de qualité optique de la cavité optique d'excitation,

$v_R$ la fréquence de résonance optique de la cavité optique d'excitation, et

$C_R = \frac{I_{Rmax} - I_{Rmin}}{I_{Rmax}}$ le contraste du faisceau lumineux de mesure émergeant de la cavité optique de mesure 140.

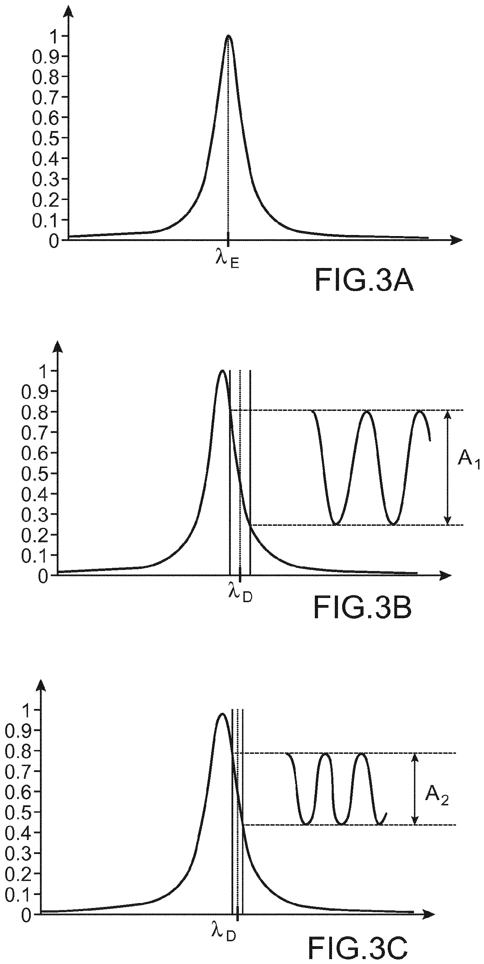

Sur les figures 3A à 3C, l'axe des abscisses correspond à une longueur d'onde, et l'axe des ordonnées correspond à une fonction de transfert.

De manière avantageuse, et comme illustré en figure 3A, la longueur d'onde d'excitation $\lambda_E$ correspond à la longueur d'onde centrale d'un pic de résonance de la cavité optique d'excitation 120 à l'équilibre, en l'absence d'absorption du faisceau lumineux d'excitation par un gaz dans la cavité optique d'excitation 120. La cavité optique d'excitation 120 est dite à l'équilibre, lorsque l'élément mécanique oscillant 150 se trouve dans une position centrale entre les deux positions extrêmes de son mouvement d'oscillation.

Comme illustré en figure 3B, de manière avantageuse, la longueur d'onde de mesure $\lambda_D$ est située sur une pente d'un pic de résonance de la cavité optique de mesure 140 à l'équilibre, en l'absence d'absorption du faisceau lumineux d'excitation par un gaz dans la cavité optique d'excitation 120. La cavité optique de mesure 140 est dite à l'équilibre, lorsque l'élément mécanique oscillant 150 se trouve dans une position centrale entre les deux positions extrêmes de son mouvement d'oscillation. Ce positionnement de la longueur d'onde de mesure $\lambda_D$ relativement au pic de résonance de la cavité optique de mesure 140 permet de maximiser la variation du faisceau lumineux de mesure générée par le mouvement de l'élément mécanique oscillant 150. En se plaçant plus particulièrement dans une zone quasiment rectiligne du pic de résonance, à mi-hauteur du pic, on s'assure également de la linéarité de la relation entre le déplacement et/ou la déformation de l'élément mécanique oscillant 150, et des variations d'amplitude de modulation et de phase sur le faisceau lumineux de mesure émergeant de la cavité optique de mesure.

A la figure 3B, on a représenté par des traits verticaux les deux positions extrêmes de la longueur d'onde de mesure $\lambda_D$ relativement au pic de résonance, au cours du mouvement d'oscillation de l'élément mécanique oscillant 150, et en l'absence d'absorption du faisceau lumineux d'excitation par le gaz. Formellement, la longueur d'onde de mesure $\lambda_D$ reste fixe, et c'est le pic de résonance qui se déplace. Pour des raisons de lisibilité de la figure, on a représenté plutôt un pic de résonance fixe, et une longueur d'onde de mesure qui se déplace. L'oscillation de la position spectrale du pic de résonance se traduit par une modulation d'amplitude sur le faisceau de mesure émergeant de la cavité optique de mesure 140. Ladite modulation présente une amplitude crête à crête $A_1$.

De la même manière, la figure 3C illustre par des traits verticaux les deux positions extrêmes de la longueur d'onde de mesure $\lambda_D$ relativement au pic de résonance, au cours du mouvement d'oscillation de l'élément mécanique oscillant 150, et après absorption d'une partie de la puissance du faisceau lumineux d'excitation par le gaz. Le faisceau lumineux de mesure émergeant de la cavité optique de mesure 140 présente cette fois une amplitude crête à crête $A_2$, avec $A_2 < A_1$.

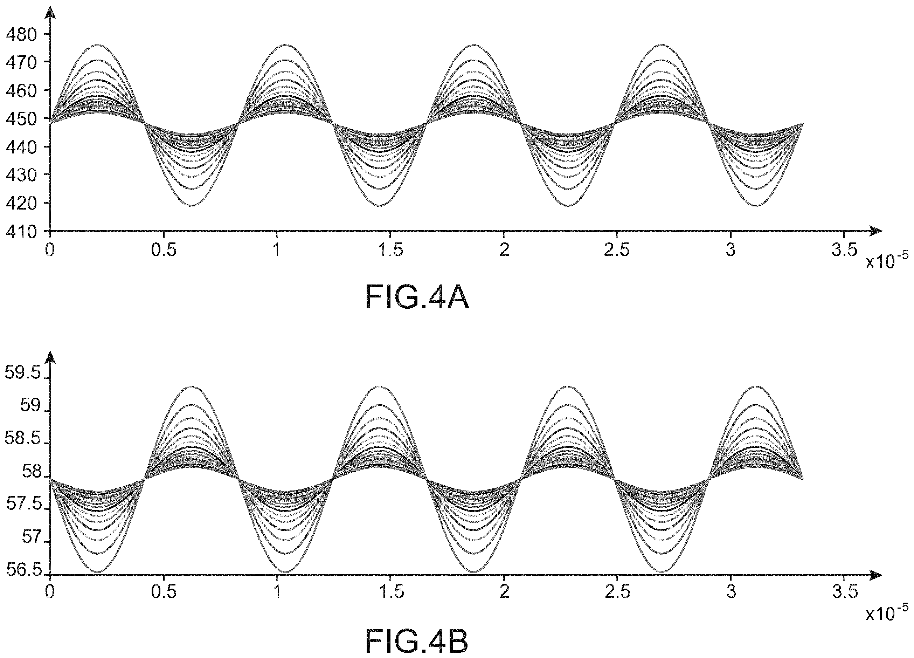

A la figure 4A, on a représenté la puissance lumineuse du faisceau lumineux de mesure émergeant de la cavité optique de mesure 140, en fonction du temps, et pour différentes concentrations en dioxyde de carbone dans le logement 122. L'axe des abscisses est un temps, en secondes. L'axe des ordonnées est une puissance lumineuse, en nW. L'amplitude crête à crête des oscillations de la puissance lumineuse varie d'environ 5 nW, pour une concentration de 1 ppb (partie par milliard), à environ 60 nW, pour une concentration de 1 ppm (partie par million).

A la figure 4B, on a représenté la phase du faisceau lumineux de mesure émergeant de la cavité optique de mesure 140, en fonction du temps, et pour différentes concentrations en dioxyde de carbone dans le logement 122. L'axe des abscisses est un temps, en secondes. L'axe des ordonnées est une phase, en degré d'angle. L'amplitude crête à crête des oscillations de la phase varie d'environ 0,4°, pour une concentration de 1 ppb (partie par milliard), à environ 3°, pour une concentration de 1 ppm (partie par million).

On voit donc que la concentration en dioxyde de carbone peut être déduite d'une mesure de puissance lumineuse et/ou de phase optique, en fonction du temps, sur le faisceau lumineux de mesure émergeant de la cavité optique de mesure 140.

Le dispositif de mesure selon l'invention permet d'obtenir une limite de détection très satisfaisante, par exemple 400 ppt (partie par trillions) pour du dioxyde de carbone, et pour un temps d'intégration d'une seconde (en considérant un bruit de détecteur de mesure de 1pW/s).

Le dispositif de mesure 100 selon l'invention présente également l'avantage que le faisceau lumineux à mesurer est distinct du faisceau lumineux absorbé par le gaz. On peut donc fixer les longueurs d'onde respectives de l'un et de l'autre selon des critères distincts. En particulier, on peut fixer la longueur d'onde du faisceau lumineux de mesure en fonction des performances en détection des photo-détecteurs connus, sans qu'il soit nécessaire de rester dans des plages de longueurs d'onde comportant des raies d'absorption caractéristiques d'un gaz à détecter.

On décrit ci-après un phénomène qui amplifie l'effet de l'absorption du faisceau lumineux d'excitation, dans le dispositif de mesure 100 selon l'invention. En effet, cette absorption a également pour effet de réduire les forces optiques qui s'appliquent en moyenne sur l'élément mécanique oscillant 150, ce qui modifie par conséquent la position d'équilibre de ce dernier, c'est-à-dire la position centrale de son mouvement d'oscillation.

Le décalage de la position d'équilibre de l'élément mécanique oscillant se traduit par un décalage entre la longueur d'onde du maximum du pic de résonance de la cavité optique d'excitation 120, et la longueur d'onde d'excitation $\lambda_E$ du faisceau lumineux d'excitation. Ce décalage a donc pour effet de contribuer encore à réduire les forces optiques exercées sur l'élément mécanique oscillant 150 par le faisceau lumineux d'excitation.

Dans la cavité optique de mesure 140, le faisceau lumineux de mesure présente une longueur d'onde de mesure $\lambda_D$ située sur la pente d'un pic de résonance de ladite cavité. Le décalage de la position d'équilibre de l'élément mécanique oscillant se traduit par un décalage de la longueur d'onde de mesure $\lambda_D$ le long de cette pente. Ce décalage contribue également à amplifier l'impact de l'absorption du faisceau lumineux d'excitation, sur les caractéristiques du faisceau lumineux de mesure émergeant de la cavité optique de mesure.

De manière avantageuse, la première source lumineuse est asservie en longueur d'onde à l'aide d'une rétroaction, en faisant revenir vers ladite source lumineuse une partie des photons du faisceau lumineux d'excitation résonant dans la cavité optique d'excitation. La rétroaction est mise en œuvre à intervalles de temps constants, par exemple une fois par seconde. Les décalages de la position d'équilibre de l'élément mécanique oscillant sont alors régulièrement annulés, avant qu'ils ne nuisent au bon fonctionnement du dispositif de mesure selon l'invention. En variante, on peut annuler ces décalages en déplaçant légèrement les miroirs de la cavité optique d'excitation. Selon une autre variante, on peut annuler l'effet produit par ces décalages en ajustant une puissance d'émission du faisceau lumineux d'excitation.

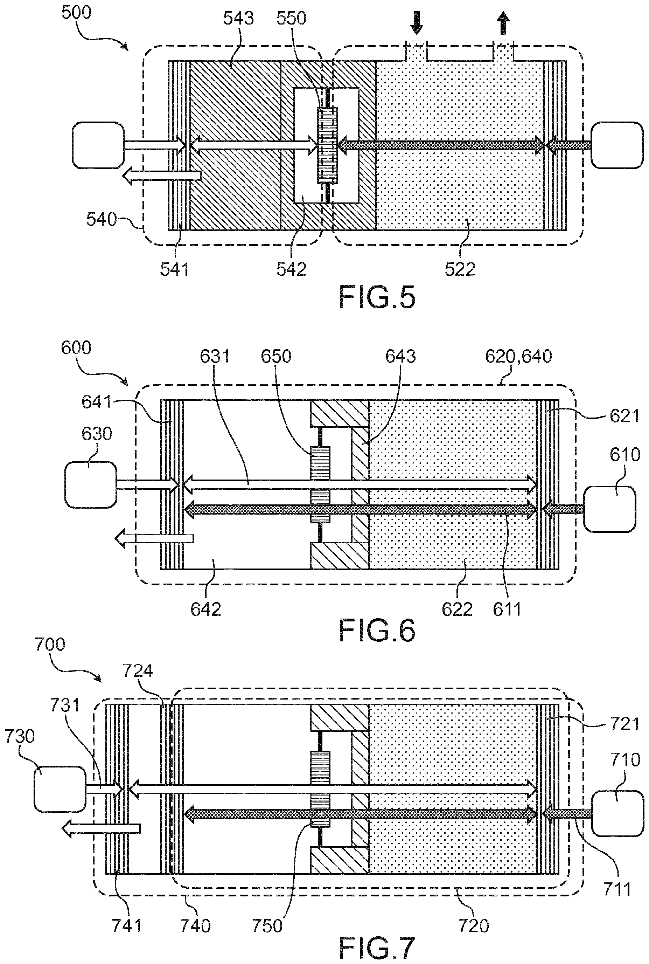

La figure 5 illustre une variante 500 du mode de réalisation de la figure 1. Dans cette variante, le logement 542 pour mettre sous vide l'élément mécanique oscillant présente un volume réduit, et s'étend à l'intérieur d'un élément épais 543. L'élément épais 543 est transparent à la longueur d'onde de mesure $\lambda_D$. Il présente une face recouverte par le miroir d'entrée 541 de la cavité optique de mesure 540. La face opposée est accolée au logement 522 pour recevoir le milieu à analyser. Dans ce mode de réalisation, le volume mis sous vide est limité à un petit volume entourant l'élément mécanique oscillant, ce qui simplifie l'opération de mise sous vide.

Selon une autre variante, non représentée, la cavité optique d'excitation est traversée par un tube apte à recevoir un milieu à étudier, le restant des cavités optiques d'excitation et de mesure étant mis sous vide.

La figure 6 illustre un deuxième mode de réalisation d'un dispositif de mesure 600 selon l'invention, dans lequel la cavité optique de mesure 620 et la cavité optique d'excitation 640 sont confondues, et délimitées chacune par les deux miroirs 641, 621 tous deux hautement réfléchissants à la longueur d'onde de mesure et à la longueur d'onde d'excitation. Ici, la première source lumineuse 610 s'étend du côté de l'un desdits miroirs, et la seconde source lumineuse 630 s'étend du côté de l'autre desdits miroirs.

L'élément mécanique oscillant 650 est transparent à la fois à la longueur d'onde de mesure $\lambda_D$ et à la longueur d'onde d'excitation $\lambda_E$. Il est constitué par exemple de la membrane telle que décrite ci-avant, sans les revêtements réfléchissants. Le taux de transmission à chacune de ces deux longueurs d'onde est supérieur ou égal à 95%, et même supérieur ou égal à 99%.

L'élément mécanique oscillant 650 étant transparent à la longueur d'onde du faisceau lumineux d'excitation, il n'est pas ou peu soumis à la pression de radiation exercée par ce dernier.

En fonctionnement, le faisceau lumineux d'excitation 611 forme une onde stationnaire dans la cavité optique de mesure 620. L'onde stationnaire est définie par des nœuds, là où sa variation d'amplitude est nulle, et des ventres, là où sa variation d'amplitude est maximale. La position des ventres est définie en l'absence d'absorption du faisceau lumineux d'excitation dans la cavité optique de mesure 620. L'élément mécanique oscillant 650 est entre un nœud et un ventre et de préférence proche du miroir de sortie 621, où le miroir de sortie est le miroir situé du côté opposé au miroir par lequel le faisceau lumineux de mesure 631 est injecté dans les cavités 620, 640.

L'élément mécanique oscillant 650 est ainsi soumis, en fonctionnement, à une force optique due cette fois au gradient de champ électrique de l'onde stationnaire. Cette force optique permet de mettre l'élément mécanique oscillant en mouvement, selon un mouvement d'auto-oscillation similaire à celui décrit ci-avant. L'auto-oscillation de l'élément mécanique oscillant est donc générée, comme dans le premier mode de réalisation, par une force optique exercée par le faisceau lumineux d'excitation confiné dans la cavité optique d'excitation. Comme dans le premier mode de réalisation, l'oscillation de l'élément mécanique oscillant 650 est fonction de la force optique qui s'applique sur ce dernier. Cette force optique dépend elle-même de la puissance lumineuse du faisceau lumineux d'excitation dans la cavité optique d'excitation 620. Cette puissance lumineuse dépend elle-même de la mesure dans laquelle le faisceau lumineux d'excitation est absorbé dans la cavité optique d'excitation 620, et donc d'une concentration en gaz dans la cavité optique d'excitation 620.

En fonctionnement, le faisceau lumineux de mesure 631 forme une onde stationnaire dans la cavité optique de mesure 640 (confondue ici avec la cavité d'excitation 620). Afin d'optimiser les interactions entre le faisceau lumineux de mesure 631 et l'élément mécanique oscillant 650, la longueur d'onde de ce dernier est placée dans la pente de la réponse spectrale des cavités 620, 640. Le déplacement et/ou la déformation de l'élément mécanique oscillant 650 modifie localement l'indice de réfraction « vu » par le faisceau lumineux de mesure 631 dans la cavité optique de mesure 640. Le déplacement et/ou la déformation de l'élément mécanique oscillant 650 modifie donc la longueur effective de la cavité optique de mesure 640, ce qui correspond à une modification de sa fréquence de résonance. Ainsi, comme dans le premier mode de réalisation, l'oscillation mécanique de l'élément mécanique oscillant se traduit par des variations des propriétés optiques du faisceau lumineux de mesure 631 qui émerge hors de la cavité optique de mesure 640 après y avoir effectué plusieurs allers et retours (en particulier des variations de sa phase optique et/ou son amplitude de modulation). La mesure des propriétés optiques du faisceau lumineux de mesure 631 qui émerge hors de la cavité optique de mesure 640 donne donc une information sur l'oscillation de l'élément mécanique oscillant 650, qui dépend *in fine* de la concentration en gaz dans la cavité optique d'excitation 620.

Comme dans le mode de réalisation de la figure 1, on retrouve :

- un logement 622 pour recevoir le milieu gazeux à étudier, s'étendant ici entre le miroir 621 et une plaque d'étanchéité 643 ; et
- un logement 642 mis sous vide, recevant l'élément mécanique oscillant 650, et s'étendant ici entre la plaque d'étanchéité 643 et le miroir 641.

La figure 7 illustre une première variante dans laquelle la cavité optique d'excitation 720 et la cavité optique de mesure 740 se recouvrent en partie, sans pour autant être confondues. Elles continuent à partager au moins un même miroir d'extrémité, et l'élément mécanique oscillant. Le dispositif de mesure 700 comporte ici trois miroirs, agencés parallèles entre eux :

- un premier miroir d'extrémité 721, du côté de la première source lumineuse 710, hautement réfléchissant à la longueur d'onde de mesure et à la longueur d'onde d'excitation ;
- un second miroir d'extrémité 741, du côté de la seconde source lumineuse 730, hautement réfléchissant à la longueur d'onde de mesure ; et
- un miroir intercalaire 724, qui s'étend entre le second miroir d'extrémité 741 et l'élément mécanique oscillant 750, transparent à la longueur d'onde de mesure et hautement réfléchissant à la longueur d'onde d'excitation.

La cavité optique d'excitation 720 est délimitée par le premier miroir d'extrémité 721 et le miroir intercalaire 724. La cavité optique de mesure 740 est délimitée par le premier miroir d'extrémité 721 et le second miroir d'extrémité 741. Cet agencement permet d'ajuster indépendamment la longueur de la cavité optique d'excitation 720 et de la cavité optique de mesure 740. On obtient ainsi plus facilement le positionnement de l'élément mécanique oscillant 750 au niveau d'un ventre du faisceau lumineux d'excitation confiné dans la cavité optique d'excitation, et d'un ventre du faisceau lumineux de mesure dans la cavité optique de mesure.

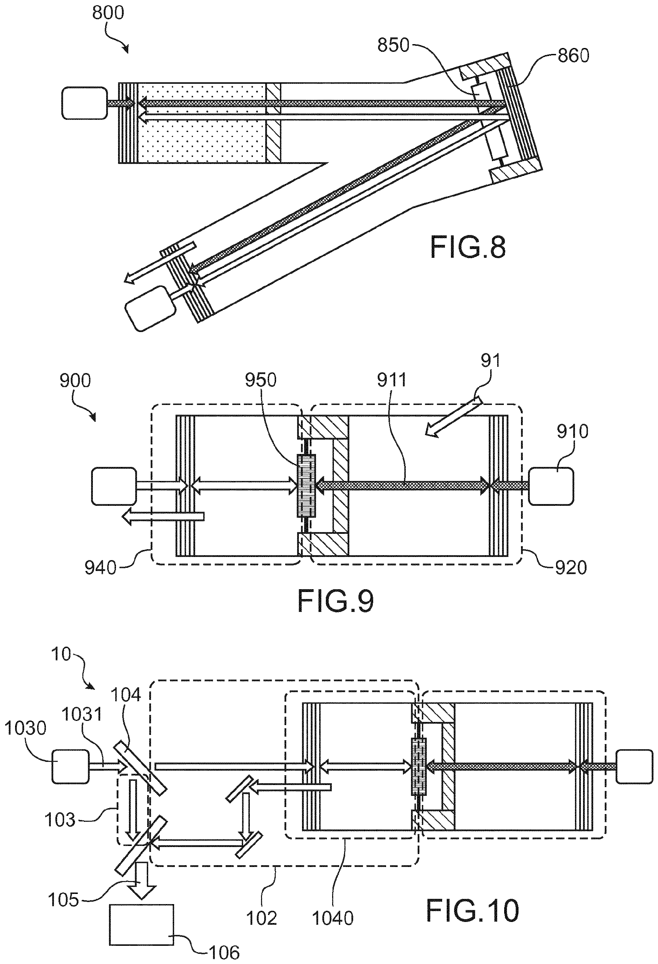

La figure 8 illustre une seconde variante 800 dans laquelle la cavité optique d'excitation et la cavité optique de mesure sont confondues, et présentent une forme en V (deux portions linaires inclinées l'une par rapport à l'autre). Le repliement des cavités optiques est réalisé à l'aide d'un miroir intercalaire 860, hautement réfléchissant à la longueur d'onde de mesure et à la longueur d'onde d'excitation. Ici, le miroir intercalaire est disposé directement derrière l'élément mécanique oscillant 850, dans le creux du V.

De nombreuses autres variantes peuvent être mises en œuvre, par exemple en combinant les variantes des figures 7 et 8.

On a décrit ci-dessus des exemples utilisant une unique longueur d'onde d'excitation. En variante, la première source lumineuse peut émettre un faisceau lumineux d'excitation présentant plusieurs pics d'émission, centrés chacun sur une longueur d'onde d'excitation respective (où chaque longueur d'onde d'excitation peut correspondre à une longueur d'onde d'absorption respective d'un gaz). Selon une autre variante, la première source lumineuse peut émettre successivement différents faisceaux lumineux d'excitation présentant chacun un pic d'émission centré sur une longueur d'onde d'excitation respective. On peut ainsi détecter les concentrations de différents gaz, et ainsi déterminer la composition d'un milieu gazeux. La longueur d'onde de résonance de la cavité d'excitation peut être ajustable (par ajustement de la longueur de ladite cavité, notamment), pour être optiquement résonante tour à tour à différentes longueurs d'onde d'excitation. En variante, la cavité optique d'excitation peut présenter plusieurs longueurs d'onde de résonance correspondant aux différentes longueurs d'onde d'excitation. Les miroirs de la cavité optique d'excitation doivent être adaptés à réfléchir efficacement chacune desdites longueurs d'onde d'excitation. Ces miroirs peuvent être constitués d'un dépôt métallique, par exemple en or, ou d'un empilement de couches diélectriques.

On peut également utiliser le dispositif de mesure selon l'invention simplement pour détecter la présence d'un composant particulier dans un milieu gazeux, sans nécessairement en déterminer la concentration.

Selon d'autres variantes, la cavité optique d'excitation comporte un élément chauffant apte à vaporiser un liquide, pour effectuer une mesure relative à un milieu liquide vaporisé.

En complément ou en variante, on peut utiliser le dispositif de mesure selon l'invention pour mettre en œuvre de la spectroscopie visible ou ultraviolette, selon la longueur d'onde du faisceau lumineux d'excitation. Là encore, l'absorption du faisceau lumineux d'excitation est liée à l'excitation de modes de vibration ou de rotation des molécules, et permet d'identifier la nature desdites molécules.

La figure 9 illustre un troisième mode de réalisation d'un dispositif de mesure 900 selon l'invention, formant cette fois un spectromètre de masse.

Dans ce mode de réalisation, l'élément mécanique oscillant est formé d'une simple membrane 950, dont l'une des faces forme une zone réceptrice pour recevoir une ou plusieurs particules. La cavité optique d'excitation 920 et la cavité optique de mesure 940 sont toutes deux mises sous vide, c'est-à-dire sous une pression inférieure à $10^{-5}$ bar et même inférieure ou égale à $10^{-6}$ bar. On peut donc s'affranchir d'une plaque d'étanchéité pour séparer les deux cavités.

En fonctionnement, la membrane 950 est mise en oscillation par le faisceau lumineux d'excitation 911 confiné dans la cavité optique d'excitation 920, de la même manière que dans le mode de réalisation de la figure 1. La membrane 950 forme ainsi un ensemble oscillant. Un faisceau de particules 91 est injecté dans la cavité optique d'excitation 920, en direction de la membrane 950. La densité de particules dans le faisceau 91 est suffisamment faible pour que l'on continue à considérer que la cavité optique d'excitation 920 et la cavité optique de mesure 940 sont mises sous vide. Lorsqu'une particule est retenue sur la membrane 950, ces dernières forment ensemble un nouvel ensemble oscillant, de masse supérieure à celle de l'ensemble oscillant précédemment constitué de la membrane 950 seule. L'oscillation de l'ensemble oscillant est donc modifiée, en particulier sa fréquence mécanique d'oscillation. Le faisceau lumineux de mesure qui émerge de la cavité optique de mesure 940 après y avoir effectué plusieurs allers et retours présente des caractéristiques représentatives de l'oscillation de l'ensemble oscillant. La mesure de ces caractéristiques permet donc d'obtenir une information sur la ou les particule(s) accrochées à la membrane 950. Le dispositif de mesure 900 selon l'invention forme ainsi un spectromètre de masse. La membrane peut être recouverte d'une couche d'absorption ayant une affinité chimique particulière avec certaines espèces à mesurer. Dans ce troisième mode de réalisation, la membrane est constituée avantageusement de graphène, de préférence un graphène monocouche. Ce mode de réalisation permet de réaliser un spectromètre de masse offrant à la fois une grande section de capture (surface de la membrane) et une grande sensibilité massique.

Dans ce mode de réalisation, la longueur d'onde d'excitation $\lambda_E$ correspond avantageusement à la longueur d'onde centrale d'un pic de résonance de la cavité optique d'excitation à l'équilibre, défini cette fois en l'absence d'absorption de particules par la membrane 950. De la même manière, la longueur d'onde de mesure $\lambda_D$ est située avantageusement sur une pente d'un pic de résonance de la cavité optique de mesure à l'équilibre, défini cette fois en l'absence d'absorption de particules par la membrane 950.

Dans ce mode de réalisation, la première source lumineuse 910 peut émettre un faisceau lumineux dans le visible, puisque l'on n'est pas limité à des longueurs d'onde correspondant à des raies d'absorption d'un gaz. Cependant, il reste avantageux que ladite première source lumineuse soit configurée pour émettre un faisceau lumineux dans le moyen infrarouge. Si, en outre, elle présente une puissance d'émission réglable, elle peut être utilisée pour émettre un faisceau lumineux dit de nettoyage. Le faisceau lumineux de nettoyage prend la forme d'un signal de haute puissance lumineuse, de préférence impulsionnel, et de spectre situé dans le moyen infrarouge. Lorsqu'il arrive sur la membrane 950, il induit un échauffement qui permet d'activer la désorption des particules précédemment adsorbées par la membrane.

La membrane peut être excitée sur plusieurs de ses modes mécaniques, afin d'avoir accès à diverses informations relatives à la particule déposée, notamment sa masse, sa forme, sa position sur la membrane, etc. De préférence, on excite un mode mécanique de fréquence $f_1$ à l'aide d'un faisceau lumineux d'excitation modulé en amplitude à ladite fréquence $f_1$.

De nombreuses variantes de ce mode de réalisation peuvent être mises en œuvre, par combinaison de chacun des modes de réalisation et variantes d'un capteur de gaz tels que décrits ci-dessus.

L'invention couvre également un système de mesure, comprenant un dispositif de mesure selon l'invention et des moyens pour réaliser une mesure sur le faisceau lumineux de mesure émergeant de la cavité optique de mesure après y avoir effectué plusieurs allers et retours.

Dans un premier mode de réalisation, non représenté, lesdits moyens pour réaliser une mesure sur le faisceau lumineux de mesure sont constitués simplement d'un photo-détecteur, pour mesurer une intensité lumineuse en fonction du temps.

Dans un second mode de réalisation illustré en figure 10, le système 10 comporte un interféromètre de type Michelson. Le faisceau lumineux de mesure 1031 émis par la seconde source lumineuse 1030 est séparé en deux sous-faisceaux par une lame séparatrice 104. La lame séparatrice 104 dirige chacun des deux sous-faisceaux vers un bras respectif 102, 103 de l'interféromètre. Un premier bras 102 de l'interféromètre comporte la cavité optique de mesure 1040 d'un dispositif de mesure selon l'invention.

Le sous-faisceau émergeant de la cavité optique de mesure 1040 après y avoir effectué plusieurs allers et retours est ensuite combiné avec le sous-faisceau ayant circulé sur le second bras 103 de l'interféromètre. La combinaison des deux sous-faisceaux produit un signal d'interférence 105 qui est reçu par un photo-détecteur 106, par exemple une photodiode sur silicium sensible à 830 nm. On peut ainsi suivre, en fonction du temps, la différence de phase entre la phase du faisceau lumineux de mesure entrant dans la cavité optique de mesure 1040 et la phase du même faisceau émergeant de la cavité optique de mesure 1040 après y avoir effectué plusieurs allers et retours.

L'un et l'autre de ces deux systèmes de mesure peuvent comprendre, en outre, des moyens de calculs pour traiter le signal fourni par le photo-détecteur, et en déduire une information relative par exemple à une concentration dans un milieu gazeux ou liquide (vaporisé), ou à une particule déposée sur une zone réceptrice.

Dans les différents modes de réalisation détaillés ci-dessus, l'élément mécanique oscillant est mis en oscillation à l'aide du faisceau lumineux d'excitation. En variante, il peut être mis en oscillation à l'aide du faisceau lumineux de mesure, présentant alors, en entrée de la cavité optique de mesure, une modulation d'amplitude et une puissance lumineuse suffisante pour générer l'oscillation. Le faisceau lumineux d'excitation exerce alors sur l'élément mécanique oscillant une force constante, qui génère un biais sur le mouvement d'oscillation de ce dernier.

Selon d'autres variantes, le dispositif de mesure ne comporte pas de cavité optique de mesure. Le faisceau lumineux de mesure est simplement réfléchi sur l'élément mécanique oscillant. On obtient une information sur le mouvement de l'élément mécanique oscillant par une simple mesure de déphasage, à l'aide d'un interféromètre dans lequel l'un des bras reçoit le faisceau lumineux de mesure réfléchi sur l'élément mécanique oscillant.

Selon d'autres variantes, l'élément mécanique oscillant peut former un miroir de fond pour la cavité optique d'excitation et la cavité optique de mesure, avec ces deux cavités qui s'étendent du même côté de l'élément mécanique oscillant.

Dans les exemples ci-dessus, l'élément mécanique oscillant est constitué d'une membrane, revêtue ou non d'un revêtement réfléchissant. L'invention n'est cependant pas limitée à cet exemple. L'élément mécanique oscillant peut par exemple être constitué d'une poutre, d'un diapason etc. En tout état de cause, l'élément mécanique oscillant présente des dimensions du même ordre de grandeur que les modes spatiaux du faisceau lumineux d'excitation et du faisceau lumineux de mesure, de préférence légèrement inférieures pour avoir des puissances lumineuses uniformes à la surface de l'élément mécanique oscillant.

L'invention n'est pas limitée à des cavités optiques formées par des miroirs plans, ces dernières pouvant comprendre des miroirs plans et/ou concaves, et/ou convexes, et/ou de forme plus complexe.

Dans les différents exemples détaillés ci-dessus, l'élément mécanique monté mobile et/ou déformable s'étend à l'intérieur d'un logement mis sous vide. Pour autant, l'invention n'est pas limitée à des dispositifs présentant cette caractéristique, et couvre également des variantes dans lesquelles l'élément mécanique monté mobile et/ou déformable ne s'étend pas dans un logement mis sous vide. L'élément mécanique monté mobile et/ou déformable est alors entouré par un milieu gazeux à analyser, lequel peut remplir à la fois la cavité optique de mesure et la cavité optique d'excitation.

On décrit dans la suite des exemples de procédés de réalisation d'un dispositif de mesure selon l'invention.

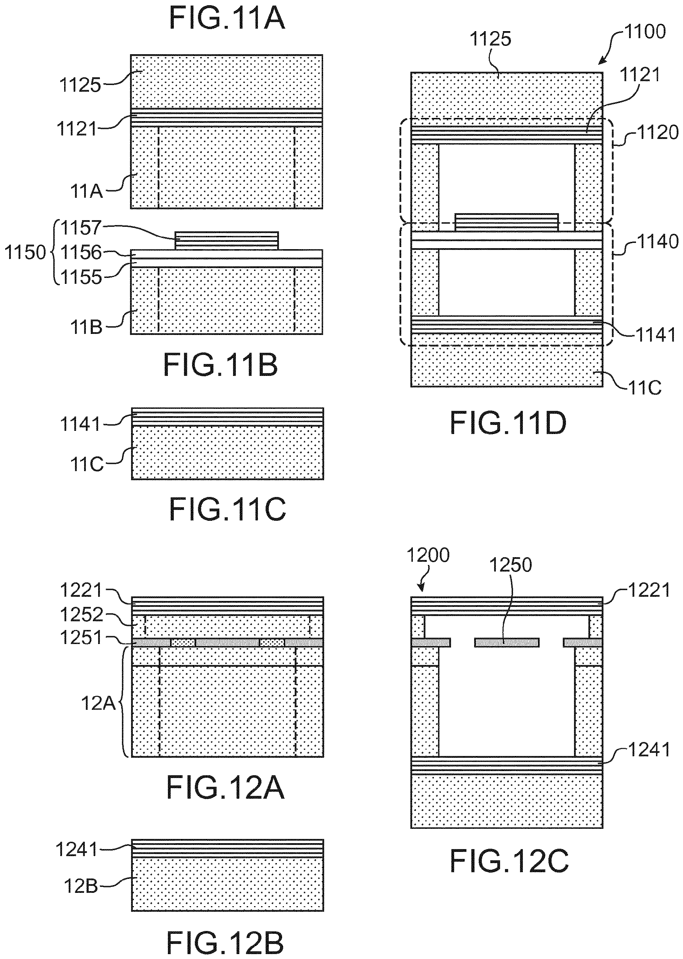

Aux figures 11A à 11D, on illustre un procédé de réalisation d'un dispositif de mesure 1100 dans lequel l'élément mécanique oscillant 1150 forme un miroir de fond à la fois pour la cavité optique d'excitation et pour la cavité optique de mesure. Dans ce mode de réalisation :

- on dépose successivement, sur un premier substrat en silicium 11A : un premier miroir de Bragg 1121, et une couche 1125 transparente à la longueur d'onde du faisceau lumineux d'excitation. Le premier substrat en silicium 11A est ensuite gravé localement pour former les parois latérales de la cavité optique d'excitation 1120 (figure 11A) ;

**EP 3 650 836 B1**

- on dépose successivement, sur un second substrat en silicium 11B : un oxyde thermique servant de couche d'arrêt de la gravure 1155, une couche de nitrure de silicium 1156 (Si$_3$N$_4$), et un empilement de couches formant un miroir de Bragg 1157, puis on grave l'empilement en face arrière jusqu'à la couche d'arrêt de la gravure 1155 pour former les parois latérales de la cavité optique de mesure 1140 (figure 11B) ;
- on réalise un troisième miroir de Bragg 1141 sur un substrat en verre 11C transparent dans le visible (figure 11C) ; et
- on colle les uns sur les autres les trois empilements ainsi réalisés. La couche d'arrêt de la gravure 1155, la couche de nitrure de silicium 1156, et le miroir de Bragg 1157 forment ensemble l'élément mécanique oscillant selon l'invention.

L'étape de gravure en face arrière met en œuvre par exemple une gravure ionique réactive profonde ou une gravure humide au TMAH. On réalise, conjointement à l'étape de gravure en face arrière, une gravure pour percer des ouvertures dans la cavité otique d'excitation de manière à laisser passer un milieu gazeux ou liquide à étudier.

Les étapes de collage diffèrent selon qu'elles impliquent deux substrats en silicium (dans ce cas un collage direct est bien adapté), ou substrat en verre et un substrat en silicium (dans ce cas un collage sous vide, un collage eutectique, ou même un collage métallique est bien adapté).

Les miroirs de Bragg sont constitués par exemple d'une alternance de couches de nitrure de silicium (SiN) et d'oxyde de silicium (SiO$_2$).

Aux figures 12A à 12C, on illustre un procédé de réalisation d'un dispositif de mesure 1200 dans lequel la cavité optique d'excitation et la cavité optique de mesure sont superposées. Dans ce mode de réalisation :

- on dépose, sur un substrat de type silicium sur isolant 12A : une fine couche de silicium 1251 gravée en périphérie et qui formera l'élément mécanique oscillant 1250, une couche sacrificielle d'oxyde 1252, et un empilement de couches formant un miroir de Bragg 1221, puis on grave l'empilement en face arrière pour former les parois latérales des cavités optiques, et on grave la couche sacrificielle d'oxyde 1252 pour libérer l'élément mécanique oscillant 1250 (figure 12A) ;
- on réalise un deuxième miroir de Bragg 1241 sur un substrat en verre 12B transparent dans le visible (figure 12B) ; et
- on colle l'un sur l'autre les deux empilements ainsi réalisés.

La gravure de l'empilement en face arrière met en œuvre différentes techniques de gravure pour graver les différentes couches de l'empilement, notamment une lithographie, une gravure d'oxyde, une gravure ionique réactive profonde et une gravure chimique. La gravure de la couche sacrificielle est une gravure vapeur à l'acide fluorhydrique.

Le cas échéant, on peut ajouter un troisième miroir, lorsque les deux cavités optiques ne sont pas confondues mais superposées.

Là-encore, les miroirs de Bragg sont constitués de préférence d'une alternance de couches de nitrure de silicium (SiN) et d'oxyde de silicium (SiO$_2$).

**Revendications**

1.  Dispositif de mesure d'une concentration d'un gaz ou d'un liquide prédéterminé (100 ; 500 ; 600 ; 700 ; 800 ; 900 ; 1100 ; 1200) comportant :

    - une première source lumineuse (110; 610; 710; 910), configurée pour émettre un faisceau lumineux d'excitation (111; 611; 711; 911) avec au moins un pic d'émission centré sur une longueur d'onde d'excitation ($\lambda_E$), où la longueur d'onde d'excitation ($\lambda_E$) correspond à une longueur d'onde d'absorption caractéristique du gaz ou du liquide prédéterminé ; et
    - une cavité optique dite d'excitation (120; 620; 720; 920; 1120), optiquement résonante à ladite longueur d'onde d'excitation, et configurée pour recevoir en entrée ledit faisceau lumineux d'excitation, avec au moins une région (122 ; 522 ; 622) à l'intérieur de la cavité optique d'excitation (120 ; 620 ; 720 ; 1120) qui est adaptée à recevoir un milieu gazeux ou liquide ; le dispositif de mesure comportant en outre :
    - une seconde source lumineuse (130; 630; 730; 1030), configurée pour émettre un faisceau lumineux de mesure (131; 631; 731; 931; 1031), avec un pic d'émission centré sur une longueur d'onde de mesure ($\lambda_D$) ; et
    - un élément mécanique mobile et/ou déformable (150; 550; 650; 750; 850; 950; 1150; 1250), monté mobile autour d'une position de retour élastique et/ou élastiquement déformable, situé à la fois sur le chemin optique du faisceau lumineux d'excitation (120; 620; 720; 920; 1120) dans la cavité optique d'excitation et sur le chemin optique du faisceau lumineux de mesure (131; 631; 731; 931; 1031), et apte à être déplacé et/ou déformé par le faisceau lumineux d'excitation ;

et dans lequel

l'un parmi le faisceau lumineux d'excitation et le faisceau lumineux de mesure est apte à mettre en oscillation l'élément mécanique mobile et/ou déformable (150 ; 550 ; 650; 750 ; 850; 950; 1150; 1250), le dispositif étant configuré de sorte qu'en fonctionnement, la présence du gaz ou du liquide prédéterminé dans la cavité optique d'excitation modifie l'oscillation de l'élément mécanique mobile et/ou déformable (150; 550; 650; 750; 850; 1150; 1250), le dispositif de mesure comprenant en outre des moyens de détection pour détecter une variation d'au moins une caractéristique du faisceau lumineux de mesure induite par l'oscillation dudit élément mécanique ainsi que des moyens de calcul pour déduire une mesure de la concentration du gaz ou du liquide prédéterminé à partir de la variation de ladite au moins une caractéristique ainsi détectée.

2. Dispositif de mesure d'une concentration d'un gaz ou d'un liquide prédéterminé (100; 500; 600; 700; 800; 900; 1100; 1200) selon la revendication 1, **caractérisé en ce que** la longueur d'onde de mesure ($\lambda_D$) est située sur le spectre visible et proche infrarouge, entre 380 nm et 1 $\mu$m, et **en ce que** la longueur d'onde d'excitation ($\lambda_E$) est située en dehors du spectre visible et proche infrarouge.

3. Dispositif de mesure d'une concentration d'un ou d'un liquide gaz prédéterminé (100; 500; 600; 700; 800 ; 900; 1100; 1200) selon la revendication 1 ou 2, **caractérisé en ce que** le faisceau lumineux d'excitation (111; 611; 711; 911) est apte à mettre en oscillation l'élément mécanique mobile et/ou déformable (150; 550; 650; 750; 850; 950; 1150; 1250), et **en ce que** faisceau lumineux de mesure (131; 631; 731; 931; 1031) présente une intensité lumineuse au moins deux fois inférieure à celle du faisceau lumineux d'excitation.

4. Dispositif de mesure d'une concentration d'un gaz ou d'un liquide prédéterminé (100; 500; 600; 700; 800 ; 900; 1100; 1200) selon l'une quelconque des revendications 1 à 3, **caractérisé en ce que** la longueur d'onde d'excitation ($\lambda_E$) correspond au maximum d'un pic de résonance de la cavité optique d'excitation à l'équilibre, la cavité optique d'excitation (120; 620; 720; 920; 1120) étant dite à l'équilibre lorsque l'élément mécanique mobile et/ou déformable (150; 550; 650; 750; 850; 950; 1150; 1250) se trouve dans une position centrale entre deux positions extrêmes de son mouvement d'oscillation.

5. Dispositif de mesure d'une concentration d'un gaz ou d'un liquide prédéterminé (100; 500; 600; 700; 800; 900; 1100; 1200) selon l'une quelconque des revendications 1 à 4, **caractérisé en ce qu'**il comprend en outre une cavité optique dite de mesure (140; 540; 640; 740; 940; 1040 ; 1140), optiquement résonante à ladite longueur d'onde de mesure ($\lambda_D$) et configurée pour recevoir en entrée le faisceau lumineux de mesure (131 ; 631 ; 731 ; 931 ; 1031), et **en ce que** l'élément mécanique mobile et/ou déformable (150; 550; 650; 750; 850; 950; 1150; 1250) appartient à la fois à la cavité optique d'excitation (120; 620; 720 ; 920; 1120) et à la cavité optique de mesure (140; 540; 640; 740; 940; 1040; 1140).

6. Dispositif de mesure d'une concentration d'un gaz ou d'un liquide prédéterminé (100 ; 500 ; 600 ; 700 ; 800 ; 900 ; 1100 ; 1200) selon la revendication 5, **caractérisé en ce que** la longueur d'onde de mesure ($\lambda_D$) est située sur un pic de résonance de la cavité optique de mesure à l'équilibre, la cavité optique de mesure (140 ; 540 ; 640 ; 740 ; 940 ; 1040 ; 1140) étant dite à l'équilibre lorsque l'élément mécanique mobile et/ou déformable (150; 550; 650; 750; 850; 950; 1150; 1250) se trouve dans une position centrale entre deux positions extrêmes de son mouvement d'oscillation.

7. Dispositif de mesure d'une concentration d'un gaz ou d'un liquide prédéterminé (100 ; 500 ; 600 ; 700 ; 800 ; 900 ; 1100 ; 1200) selon la revendication 6, **caractérisé en ce que** la longueur d'onde de mesure ($\lambda_D$) est située sur une pente dudit pic de résonance.

8. Dispositif de mesure d'une concentration d'un gaz ou d'un liquide prédéterminé (100 ; 500 ; 900 ; 1100) selon l'une quelconque des revendications 5 à 7, **caractérisé en ce qu'**une première face de l'élément mécanique mobile et/ou déformable (150 ; 550 ; 950 ; 1150) est optiquement réfléchissante à la longueur d'onde d'excitation ($\lambda_E$), et **en ce qu'**une seconde face de l'élément mécanique mobile et/ou déformable (150 ; 550 ; 950 ; 1150), opposée à ladite première face, est optiquement réfléchissante à la longueur d'onde de mesure ($\lambda_D$), avec la cavité optique d'excitation (120 ; 920 ; 1120) qui s'étend du côté de la première face de l'élément mécanique mobile et/ou déformable et la cavité optique de mesure (140 ; 540 ; 940; 1040 ; 1140) qui s'étend du côté de la seconde face de l'élément mécanique mobile et/ou déformable.

9. Dispositif de mesure d'une concentration d'un gaz ou d'un liquide prédéterminé (600 ; 700 ; 800 ; 1200) selon l'une quelconque des revendications 5 à 7, **caractérisé en ce que** la cavité optique d'excitation (620 ; 720) et la cavité optique de mesure (640; 740) se recouvrent au moins partiellement, et **en ce que** l'élément mécanique mobile et/ou déformable (650; 750; 850; 1250) s'étend dans une région située à la fois à l'intérieur de la cavité optique d'excitation et à l'intérieur de la cavité optique de mesure.

**10.** Dispositif de mesure d'une concentration d'un gaz ou d'un liquide prédéterminé (100; 500; 600; 700; 800; 900; 1100; 1200) selon l'une quelconque des revendications 1 à 9, **caractérisé en ce que** l'élément mécanique mobile et/ou déformable (150; 550; 650; 750; 850; 950; 1150; 1250) s'étend selon une surface comprise entre 100*100 $\mu$m$^2$ et 10*10 mm$^2$.

**11.** Dispositif de mesure d'une concentration d'un gaz ou d'un liquide prédéterminé (100; 500; 600; 700; 800; 1100; 1200) selon l'une quelconque des revendications 1 à 10, **caractérisé en ce que** l'élément mécanique mobile et/ou déformable (150; 550; 650; 750; 850; 1150; 1250) s'étend à l'intérieur d'un logement sous vide (142 ; 542).

**12.** Dispositif de mesure d'une concentration d'un gaz ou d'un liquide prédéterminé (10) selon l'une quelconque des revendications 1 à 11, **caractérisé en ce que** les moyens de détection comprennent un interféromètre dont l'un des bras (102) comporte la cavité optique de mesure (1040).

**13.** Dispositif de mesure d'une concentration d'un gaz ou d'un liquide prédéterminé (10) selon l'une quelconque des revendications 1 à 12, **caractérisé en ce que** le dispositif est configuré de manière à ce que la fréquence d'oscillation dudit élément mécanique dépende de la concentration du gaz ou du liquide à mesurer et que la variation de ladite au moins une caractéristique du faisceau lumineux de mesure est une variation de sa phase optique et/ou de son amplitude de modulation.

**Patentansprüche**

**1.** Vorrichtung zur Messung einer Konzentration eines vorbestimmten Gases oder Flüssigkeit (100; 500; 600; 700; 800; 900; 1100; 1200), umfassend:

- eine erste Lichtquelle (110; 610; 710; 910), die dazu konfiguriert ist, einen Anregungslichtstrahl (111; 611; 711; 911) mit wenigstens einem Emissionspeak zu emittieren, der auf einer Anregungswellenlänge ($\lambda_E$) zentriert ist, wobei die Anregungswellenlänge ($\lambda_E$) einer charakteristischen Absorptionswellenlänge des vorbestimmten Gases oder Flüssigkeit entspricht; und
- eine sogenannte optische Anregungskavität (120; 620; 720; 920; 1120), die optisch bei der Anregungswellenlänge resonant ist und dazu konfiguriert ist, am Eingang den Anregungslichtstrahl zu empfangen, mit wenigstens einer Region (122; 522; 622) im Inneren der optischen Anregungskavität (120; 620; 720; 1120), die dazu ausgelegt ist, ein gasförmiges oder flüssiges Milieu aufzunehmen;
- wobei die Messvorrichtung ferner umfasst:
- eine zweite Lichtquelle (130; 630; 730; 1030), die dazu konfiguriert ist, einen Messlichtstrahl (131; 631; 732; 931; 1031) mit einem Emissionspeak zu emittieren, der auf einer Messwellenlänge ($\lambda_D$) zentriert ist; und
- ein bewegliches und/oder verformbares mechanisches Element (150; 550; 650; 750; 850; 950,1150; 1250), das beweglich um eine elastische Rückstellposition herum und/oder elastisch verformbar montiert ist, das sowohl auf dem optischen Weg des Anregungslichtstrahls (120; 620; 720; 920; 1120) in der optischen Anregungskavität als auch auf dem optischen Weg des Messlichtstrahls (131; 631; 731; 931; 1031) angeordnet und dazu ausgelegt ist, durch den Anregungslichtstrahl verlagert und/oder verformt zu werden; und wobei einer von dem Anregungslichtstrahl und dem Messlichtstrahl dazu ausgelegt ist, das bewegliche und/oder verformbare mechanische Element (150; 550; 650; 750; 850; 950; 1150; 1250) in Oszillation zu versetzen, wobei die Vorrichtung derart konfiguriert ist, dass im Betrieb das Vorhandensein des vorbestimmten Gases oder Flüssigkeit in der optischen Anregungskavität die Oszillation des beweglichen und/oder verformbaren mechanischen Elements (150; 550; 650; 750; 850; 1150; 1250) modifiziert, wobei die Messvorrichtung ferner Detektionsmittel umfasst, um eine Variation wenigstens einer Eigenschaft des Messlichtstrahls zu detektieren, die durch die Oszillation des mechanischen Elements induziert ist, sowie Rechenmittel, um eine Messung der Konzentration des vorbestimmten Gases oder Flüssigkeit aus der Variation der wenigstens einen Eigenschaft, die somit detektiert ist, abzuleiten.

**2.** Vorrichtung zur Messung einer Konzentration eines vorbestimmten Gases oder Flüsigkeit (100; 500; 600; 700; 800; 900; 1100; 1200) nach Anspruch 1, **dadurch gekennzeichnet, dass** die Messwellenlänge ($\lambda_D$) im sichtbaren Spektrum und nahem Infrarot zwischen 380 nm und 1 $\mu$m gelegen ist, und dass die Anregungswellenlänge ($\lambda_E$) außerhalb

des sichtbaren Spektrums und des nahen Infrarots gelegen ist.

3. Vorrichtung zur Messung einer Konzentration eines vorbestimmten Gases oder Flüssigkeit (100; 500; 600; 700; 800; 900; 1100; 1200) nach Anspruch 1 oder 2, **dadurch gekennzeichnet, dass** der Anregungslichtstrahl (111; 611; 711; 911) dazu ausgelegt ist, das bewegliche und/oder verformbare mechanische Element (150; 550; 650; 750; 850; 950; 1150; 1250) in Oszillation zu versetzen, und dass der Messlichstrahl (131; 631; 731; 931; 1031) eine Lichtintensität aufweist, die wenigstens zweimal kleiner ist als jene des Anregungslichtstrahls.

4. Vorrichtung zur Messung einer Konzentration eines vorbestimmten Gases oder Flüssigkeit (100; 500; 600; 700; 800; 900; 1100; 1200) nach einem der Ansprüche 1 bis 3, **dadurch gekennzeichnet, dass** die Anregungswellenlänge ($\lambda_E$) dem Maximum eines Resonanzpeaks der optischen Anregungskavität im Gleichgewicht entspricht, wobei die optische Anregungskavität (120; 620; 720; 920; 1120) als im Gleichgewicht bezeichnet wird, wenn sich das bewegliche und/oder verformbare mechanische Element (150; 550; 650, 750; 850; 950; 1150; 1250) in einer zentralen Position zwischen zwei Extrempositionen seiner Oszillationsbewegung befindet.

5. Vorrichtung zur Messung einer Konzentration eines vorbestimmten Gases oder Flüssigkeit (100; 500; 600; 700; 800; 900; 1100; 1200) nach einem der Ansprüche 1 bis 4, **dadurch gekennzeichnet, dass** sie ferner eine sogenannte optische Messkavität (140; 540; 640; 740; 940; 1040; 1140) umfasst, die optisch bei der Messwellenlänge ($\lambda_D$) resonant und dazu konfiguriert ist, am Eingang den Messlichtstrahl (131; 631; 731; 931; 1031) zu empfangen, und dass das bewegliche und/oder verformbare mechanische Element (150; 550; 650; 750; 850; 950; 1150; 1250) sowohl zur optischen Anregungskavität (120; 620; 720; 920; 1120) als auch zur optischen Messkavität (140; 540; 640; 740; 940; 1040; 1140) gehört.

6. Vorrichtung zur Messung einer Konzentration eines vorbestimmten Gases oder Flüssigkeit (100; 500; 600; 700; 800; 900; 1100; 1200) nach Anspruch 5, **dadurch gekennzeichnet, dass** die Messwellenlänge ($\lambda_D$) auf einem Resonanzpeak der optischen Messkavität im Gleichgewicht liegt, wobei die optische Messkavität (140; 540; 640; 740; 940; 1040; 1140) als im Gleichgewicht angesehen wird, wenn das bewegliche und/oder verformbare mechanische Element (150; 550; 650; 750; 850; 950; 1150; 1250) sich in einer zentralen Position zwischen zwei extremen Positionen seiner Oszillationsbewegung befindet.

7. Vorrichtung zur Messung einer Konzentration eines vorbestimmten Gases oder Flüssigkeit (100; 500; 600; 700; 800; 900; 1100; 1200) nach Anspruch 6, **dadurch gekennzeichnet, dass** die Messwellenlänge ($\lambda_D$) sich in einer Schräge des Resonanzpeaks befindet.

8. Vorrichtung zur Messung einer Konzentration eines vorbestimmten Gases oder Flüssigkeit (100; 500; 900; 1100) nach einem der Ansprüche 5 bis 7, **dadurch gekennzeichnet, dass** eine erste Fläche des beweglichen und/oder verformbaren mechanischen Elements (150; 550; 950; 1150) optisch bei der Anregungswellenlänge ($\lambda_E$) reflektierend ist, und dass eine zweite Fläche des beweglichen und/oder verformbaren mechanischen Elements (150; 550; 950; 1150) entgegengesetzt zu der ersten Fläche optisch bei der Messwellenlänge ($\lambda_D$) reflektierend ist, wobei sich die optische Anregungskavität (120; 920; 1120) auf der Seite der ersten Fläche des beweglichen und/oder verformbaren mechanischen Elements erstreckt, und die optische Messkavität (140; 540; 940; 1040; 1140) sich auf der Seite der zweiten Fläche des beweglichen und/oder verformbaren mechanischen Elements erstreckt.

9. Vorrichtung zur Messung einer Konzentration eines vorbestimmten Gases oder Flüssigkeit (600; 700; 800; 1200) nach einem der Ansprüche 5 bis 7 **dadurch gekennzeichnet, dass** die optische Anregungskavität (620; 720) und die optische Messkavität (640; 740) sich wenigstens teilweise überdecken, und dass das bewegliche und/oder verformbare mechanische Element (650; 750; 850; 1250) sich in einer Region erstreckt, die sowohl im Inneren der optischen Anregungskavität als auch im Inneren der optischen Messkavität gelegen ist.

10. Vorrichtung zur Messung einer Konzentration eines vorbestimmten Gases oder Flüssigkeit (100; 500; 600; 700; 800; 900; 1100; 1200) nach einem der Ansprüche 1 bis 9, **dadurch gekennzeichnet, dass** das bewegliche und/oder verformbare mechanische Element (150; 550; 650; 750; 850; 950; 1150; 1250) sich entlang einer Oberfläche erstreckt, die zwischen $100*100 \ \mu m^2$ und $10*10 \ mm^2$ enthalten ist.

11. Vorrichtung zur Messung einer Konzentration eines vorbestimmten Gases oder Flüssigkeit (100; 500; 600; 700; 800; 1100; 1200) nach einem der Ansprüche 1 bis 10 **dadurch gekennzeichnet, dass** das bewegliche und/oder verformbare mechanische Element (150; 550; 650; 750; 850; 1150; 1250) sich im Inneren einer evakuierten Aufnahme (142; 542) erstreckt.

**12.** Vorrichtung zur Messung einer Konzentration eines vorbestimmten Gases oder Flüssigkeit (10) nach einem der Ansprüche 1 bis 11, **dadurch gekennzeichnet, dass** die Detektionsmittel ein Interferometer umfassen, bei dem einer der Arme (102) die optische Messkavität (1040) umfasst.

**13.** Vorrichtung zur Messung einer Konzentration eines vorbestimmten Gases oder Flüssigkeit (10) nach einem der Ansprüche 1 bis 12, **dadurch gekennzeichnet, dass** die Vorrichtung derart konfiguriert ist, dass die Oszillationsfrequenz des mechanischen Elements von der zu messenden Konzentration des Gases oder Flüssigkeit abhängt, und dass die Variation der wenigstens einen Eigenschaft des Messlichtstrahls eine Variation seiner optischen Phase und/oder seiner Modulationsamplitude ist.

**Claims**

**1.** Device for measuring a concentration of a predetermined gas or liquid (100; 500; 600; 700; 800; 900; 1100; 1200), comprising:

- a first light source (110; 610; 710; 910), configured, to emit an excitation light beam (111; 611; 711; 911) with at least one emission peak, being centered on an excitation wavelength ($\lambda_E$), wherein the excitation wavelength ($\lambda_E$) corresponds to a characteristic absorption wave length of the predetermined gas or liquid; and
- a so called optical excitation cavity (120; 620; 720; 920; 1120), being optically resonant at the excitation wavelength and being configured to receive at the entrance the excitation light beam, with at least one region (122; 522; 622) within an inside of the optical excitation cavity (120; 620; 720; 1120), being configured to receive a gaseous or liquid means;
- wherein the device for measuring further comprises:
- a second light source (130; 630; 730; 1030), being configured to emit a measuring light beam (131; 631; 732; 931; 1031) with an emission peak, being centered on a measurement wavelength ($\lambda_D$); and
- a movable and/or deformable mechanical element (150; 550; 650; 750; 850; 950,1150; 1250), being movable around an elastic feedback position and/or mounted elastically deformable, being placed on the optical path of the excitation light beam (120; 620; 720; 920;1120) within the optical excitation cavity and further being placed on the optical path of the measuring light beam (131; 631; 731; 931; 1031) and being configured to be moved or deformed by the excitation light beam;
an wherein one of the excitation light beam and measurement light beam is configured to put into oscillation the movable and/or deformable mechanical element, wherein the device is configured such that, in use, the presence of the predetermined gas or liquid within the optical cavity modifies the oscillation of the movable and/or deformable mechanical element (150; 550; 650; 750; 850; 1150; 1250), wherein the device further comprises detection means for detecting a variation of at least one property of the measuring light beam, being induced by the oscillation of the mechanical element, and calculating means for measuring a concentration of the predetermined gas or liquid from the variation of the at least one property, being thus determined.

**2.** Device for measuring a concentration of a predetermined gas or liquid (100; 500; 600; 700; 800; 900; 1100; 1200) according to claim 1 **characterized in that** the measurement wavelength ($\lambda_D$) lies within the visible spectrum and near infrared between 380 nm and 1 $\mu$m, and the excitation wavelength ($\lambda_E$) lies outside of the visible spectrum and the near infrared.

**3.** Device for measuring a concentration of a predetermined gas or liquid (100; 500; 600; 700; 800; 900; 1100; 1200) according to claim 1 or 2 **characterized in that** the excitation light beam (111; 611; 711; 911) is configured to put into oscillation the movable and/or deformable mechanical element (150; 550; 650; 750; 850; 950; 1150; 1250), and **in that** the measurement light beam (131; 631; 731; 931; 1031) has a light intensity being at least two times smaller than that of the excitation light beam.

**4.** Device for measuring a concentration of a predetermined gas or liquid (100; 500; 600; 700; 800; 900; 1100; 1200) according to any of claims 1 to 3 **characterized in that** the excitation wavelength ($\lambda_E$) corresponds to the maximum of a resonance peak of the optical excitation cavity in equilibrium, wherein the optical excitation cavity (120; 620; 720; 920;1120) is designated as being in equilibrium if the movable and/or deformable mechanical element (150; 550; 650, 750; 850; 950; 1150; 1250) is in a central position between two extremal positions of its oscillatory movement.

**5.** Device for measuring a concentration of a predetermined gas or liquid (100; 500; 600; 700; 800; 900; 1100; 1200) according to any of claims 1 to 4 **characterized in that** it further comprises a so called optical measurement cavity (140; 540; 640, 740; 940; 1040; 1140), which is optically resonant at the measurement wavelength ($\lambda_D$) and being configured to receive the measurement light beam (131; 631; 731; 931; 1031) at the entrance, and that the movable and/or deformable mechanical element (150; 550; 650; 750; 850; 950; 1150; 1250) belongs to the optical excitation cavity (120; 620; 720; 920; 1120) and to the optical measurement cavity (140; 540; 640; 740; 940; 1040; 1140).

6. Device for measuring a concentration of a predetermined gas or liquid (100; 500; 600; 700; 800; 900; 1100; 1200) according to claim 5 **characterized in that** the measurement wavelength ($\lambda_D$) lies on a resonance peak of the optical measurement cavity in equilibrium, wherein the optical measurement cavity (140; 540; 640; 740; 940; 1040; 1140) is considered in equilibrium if the movable and or deformable mechanical element (150; 550; 650; 750; 850; 950; 1150; 1250) is in a central position between two extremal positions of its oscillatory movement.

7. Device for measuring a concentration of a predetermined gas or liquid (100; 500; 600; 700; 800; 900; 1100; 1200) according to claim 6 **characterized in that** the measurement wavelength ($\lambda_D$) is situated in a slope of the resonance peak.

8. Device for measuring a concentration of a predetermined gas or liquid (100; 500; 600; 700; 800; 900; 1100; 1200) according to any of claims 5 to 7 **characterized in that** a first area of the movable and/or deformable mechanical element (150; 550; 950; 1150) is optically reflecting at the excitation wavelength ($\lambda_E$), and that a second area of the movable and/or deformable mechanical element (150; 550; 950; 1150) which is opposite to the first area is optically reflecting at the measurement wavelength ($\lambda_D$), wherein the optical excitation cavity (120; 920; 1120) extends on the side of the first area of the movable and or deformable mechanical element, and the optical measurement cavity (140; 540; 940; 1040; 1140) extends on the side of the second area of the movable and/or deformable mechanical element.

9. Device for measuring a concentration of a predetermined gas or liquid (100; 500; 600; 700; 800; 900; 1100; 1200) according to any of claims 5 to 7 **characterized in that** the optical excitation cavity (620; 720) and the optical measurement cavity (640; 740) overlap at least in part, and that the movable and/or deformable mechanical element (650; 750; 850; 1250) extends in a region being within the optical excitation cavity and within the optical measurement cavity.

10. Device for measuring a concentration of a predetermined gas or liquid (100; 500; 600; 700; 800; 900; 1100; 1200) according to any of claims 1 to 9 **characterized in that** the movable and/or deformable mechanical element (150; 550; 650; 750; 850; 950; 1150; 1250) extends along a surface being between $100*100 \ \mu m^2$ and $10*10 \ mm^2$.

11. Device for measuring a concentration of a predetermined gas or liquid (100; 500; 600; 700; 800; 900; 1100; 1200) according to any of claims 1 to 10 **characterized in that** the movable and/or deformable mechanical element (150; 550; 650; 750; 850; 950; 1150; 1250) extends within an inside of a vacuum holder (142; 542).

12. Device for measuring a concentration of a predetermined gas or liquid (100; 500; 600; 700; 800; 900; 1100; 1200) according to any of claims 1 to 11 **characterized in that** the detection means comprise an interferometer of which one of the arms (102) comprise the optical measurement cavity (1040).

13. Device for measuring a concentration of a predetermined gas or liquid (100; 500; 600; 700; 800; 900; 1100; 1200) according to any of claims 1 to 12 **characterized in that** the device is configured such that the oscillatory frequency of the mechanical element depends on the concentration of the gas or liquid to be measured, and that the variation of the at least one property of the measurement light beam is a variation of its optical phase and/or modulation amplitude.

FIG.1

FIG.2A

FIG.2B

FIG.3A

FIG.3B

FIG.3C

FIG.4A

FIG.4B

FIG.5

FIG.6

FIG.7

800

850

860

FIG.8

900

950    911    91

910

940                                920

FIG.9

10

104

1031

1030

103

105

106

102    1040

FIG.10

# FIG.11A

# FIG.11B

# FIG.11C

# FIG.11D

# FIG.12A

# FIG.12B

# FIG.12C

## RÉFÉRENCES CITÉES DANS LA DESCRIPTION

**Documents brevets cités dans la description**

- US 20140043614 A1

**Littérature non-brevet citée dans la description**

- **P. MALARA et al.** Sensitivity enhancement of off-axis ICOS using wavelength Modulation. *Appl Phys B, Lasers and Optics,* 2012

- **D. ROMANINI et al.** Fast, low-noise, mode-by-mode, cavity-enhanced absorption spectroscopy by diode-laser self-locking. *Appl Phys B, Lasers and Optics,* 2005